(19) Europäisches Patentamt

**European Patent Office**

Office européen des brevets

(11) Publication number: **0 147 936 B1**

(12) **EUROPEAN PATENT SPECIFICATION**

(45) Date of publication of patent specification: **03.06.92**　(51) Int. Cl.⁵: **G06F 3/14**, G09G 3/00, G03G 15/00

(21) Application number: **84307832.0**

(22) Date of filing: **13.11.84**

(54) **Message display device.**

(30) Priority: **14.11.83 JP 213663/83**

(43) Date of publication of application:
**10.07.85 Bulletin 85/28**

(45) Publication of the grant of the patent:
**03.06.92 Bulletin 92/23**

(84) Designated Contracting States:
**DE GB**

(56) References cited:
**EP-A- 0 107 905**
**DE-A- 3 317 952**
**US-A- 4 381 505**

(73) Proprietor: **FUJI XEROX CO., LTD.**
**No. 3-5, Akasaka 3-chome**
**Minato-ku Tokyo 107(JP)**

(72) Inventor: **Yamaguchi, Junichi c/o Fuji Xerox Co.Ltd.**
**Ebina Works, No.2274 Hongo**
**Ebina-shi Kanagawa(JP)**
Inventor: **Miyazaki, Akira c/o Fuji Xerox Co.Ltd.**
**Ebina Works, No.2274 Hongo**
**Ebina-shi Kanagawa(JP)**

(74) Representative: **Evershed, Michael et al**
**MARKS & CLERK Alpha Tower Suffolk Street**
**Oueensway**
**Birmingham B1 1TT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a message display device for displaying a message representing the operating status of and/or operating instructions for an electronic apparatus such as a copying machine, a facsimile machine, a word processor, a printer or the like (hereinafter simply referred to as "a copying machine or the like"), in which the language to be displayed can be easily changed and the contents of the message to be displayed can be readily altered without changing message display control software.

It has already been proposed, in EP-A-107905, which falls under Article 54(3) EPC, to provide a copying machine with a message display device which includes a control section generating various status signals which are used by a message display control section to select a particular message from a plurality of previously stored messages. The arrangement disclosed in EP-A-107905, allows the messages displayed to be changed from one language to another by substitution of a different ROM, but the ROMs for different languages must all have corresponding messages written at specific ROM locations which leads to inefficient use of ROM.

The object of the present invention is to provide an improved message display device which overcomes this drawback.

A message display device in accordance with the invention comprises an apparatus control section for controlling said electronic apparatus and generating a status signal representing a status of said apparatus; a message display control section responsive to said status signal for selecting a message to be displayed from among previously stored messages and for producing a display pattern signal on the basis of the selected message to be displayed; and a message display section responsive to said display pattern signal for displaying the selected message to be displayed; wherein said message display control section comprises status memory means for storing message numbers of messages to be displayed for every unit display; message memory means for storing messages to be displayed and corresponding message numbers; and status judgement/control means comprising status judgement means for judging said status on the basis of the status signal, message number detecting means for detecting the message number of the message to be displayed, message selecting means for selecting a message corresponding to the message number and display instruction means for issuing an output instruction; said device operating such that said status judgement means judges the status in response to the status signal generated by said apparatus control section, and on the basis of this judgement the message number of the message to be displayed corresponding to the judged status is read out from the status memory means, the message to be displayed corresponding to that message number is selected out of the message memory and an instruction is issued to the message display section to instruct it to display the selected message.

The status memory means may store, for every unit display, in addition to the message numbers of messages to be displayed, corresponding output formats of the messages.

By storing output formats corresponding to messages to be displayed in the status memory, it is made possible to designate an output format and to change the display mode between messages in accordance with the status.

It should be noted that, as used herein, the word "language" includes various different alphabets and character sets.

This invention will now be described in more detail, by way of example, with reference to the drawings in which:

Fig. 1 is a block diagram showing a first embodiment of a message display device of the present invention;

Fig. 2 is a block diagram showing a second embodiment of a message display device of the present invention;

Fig. 3 is an explanatory diagram showing the first embodiment in detail;

Fig. 4 is an explanatory diagram showing the message control of a message control ROM;

Figs. 5A to 5G are explanatory diagrams showing the message ROM;

Fig. 6 is a flowchart showing the operation of the first embodiment;

Fig. 7 is an explanatory diagram showing the second embodiment in detail;

Figs. 8A to 8L are explanatory diagrams showing a message ROM;

Fig. 9 is an explanatory diagram showing scroll output formats;

Figs. 10 is an explanatory diagram showing alternate output formats;

Figs. 11A and 11B are explanatory diagrams showing two kinds of alternate modes;

Figs. 12A to 12D are explanatory diagrams showing help modes;

Fig. 13 is a flowchart showing the operation of the second embodiment; and

Figs. 14A to 14C are flowcharts showing a display output routine, a non-display timer time-out routine and a message output timer time-out routine, respectively.

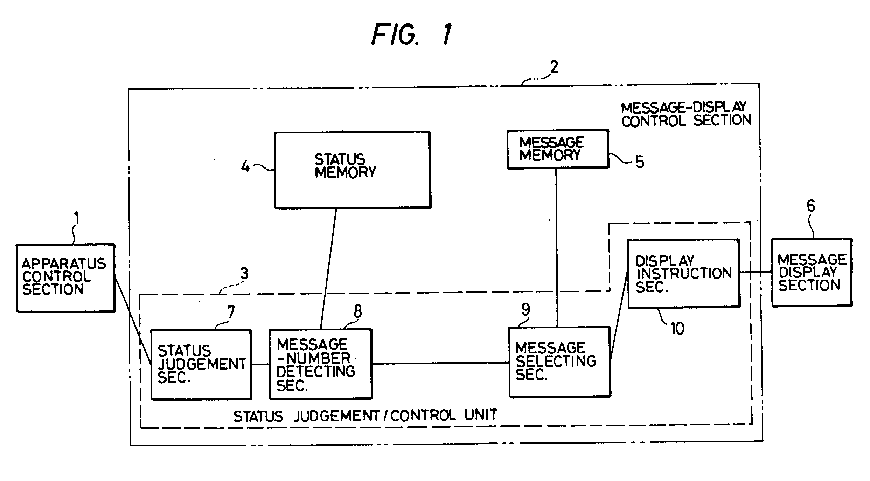

Fig. 1 shows a first embodiment of the present invention. The message display device according to the present invention includes an apparatus control section 1, a message display controller 2 having a status judgement/control unit 3, a status memory 4, a message memory 5, and a message display section 6. The apparatus control section 1 acts to control the operation of an electronic apparatus such as a copying machine or the like and produces a control signal, hereinafter referred to as a status signal, in accordance with the operating status of the machine, conditions of paper jam, lack of copying paper, shortage of toner, etc., or operating instructions, for example, the setting of the number of copies, the setting of a reduction/magnification factor, etc. The message-display controller 2 is used for informing the message display section 6 of the message to be displayed in accordance with the status signal and for judging the status in response to the status signal generated by the status judgement/control unit. On the basis of the result of this judgement, the message number of the message to be displayed corresponding to the judged status is read out from the status memory 4, the message to be displayed corresponding to the detected message number is selected out of message memory 5, and an instruction is issued to the message display section 6 to instruct it to display the selected message.

The message display control section 2 is constituted by the three sections as described above. A judgement section 7 judges the status in response to the status signal, a message-number detecting section 8 detects the message number of the message to be displayed, a message selecting section 9 selects the message corresponding to the message number, and a display instruction section 10 issues an output instruction. The status memory 4 stores messages to be displayed in the form of message number, each message corresponding to a particular case where display is to be effected, each case including a message to be displayed in accordance with a status. The message memory 5 stores messages to be displayed and serial numbers, that is, message numbers, defined corresponding to the messages.

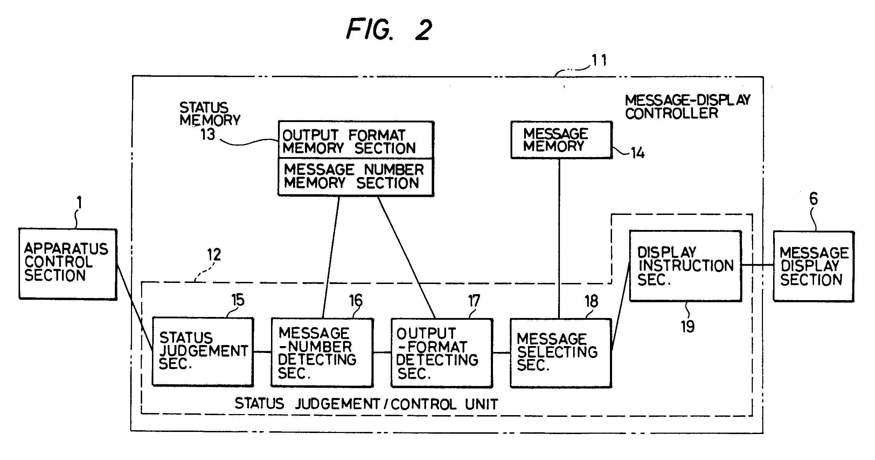

Fig. 2 shows a second embodiment of the present invention. This arrangement differs from that shown in Fig. 1 in that a status memory stores output formats as well as message numbers, and that a status judgement/controller has an output-format detecting section 17. The output format is used for controlling the display format of the message in the case where it is necessary to display two or more messages in accordance with the status of an apparatus, in the case where it is required to change the kind of message to be displayed depending on the level of skill of the operator, or in the case where it is necessary to change the period of display and/or the number of times of display depending on the length or importance of the message. The mode of message display is made selectable in accordance with the status of the apparatus on the basis of the output format detected by the output-format detecting section 17.

Similarly to the case of Fig. 1, the status is judged by a status signal from an apparatus control section 1. On the basis of the result of this judgement, the message number of the message to be displayed corresponding to the status is read out from a status memory 13, and the output format is detected by the output format detector 17. The message to be displayed corresponding to the detected message number is selected from a message memory 14, and an output instruction to display the selected message with the detected format is issued to a message display section 6.

Although description has been made above such that the status judgement/control unit 3/12 judges the status on the basis of a status signal, it is not necessary to provide the status judgement section in the message display controller 2/11.

The arrangement described above is featured in that the apparatus control section 1 is separated from the message-display controller 2/11, in that the message-display controller 2/11 is provided with three components, that is, the message memory 5/14, the status memory 4/13, and the status judgement/control unit 3/12, and in that the status judgement/control unit 3/12 and the message memory 5/14 are accessible using message numbers of the status memory 4/13.

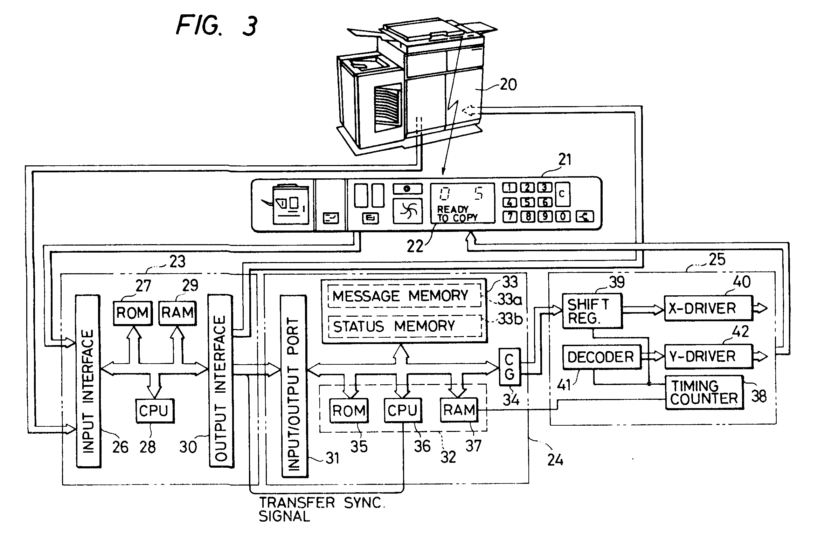

Fig. 3 shows an embodiment of the arrangement of Fig. 1 which includes a message display section 22 provided on a console 21 of a copying machine 20, a copying-machine control section (microcomputer) 23 for controlling the copying machine 20, a message-display control section 24 receiving a status signal from the control section 23 and producing a display signal in accordance with the status signal, and a drive section 25 for causing the message display section 22 of the console 21 to display a predetermined message on the basis of the display signal form the message-display control section 24. The copying-machine control section 23 includes a microcomputer having an input/output interface 26, a program ROM 27, a CPU 28, and an operation-result storing RAM 29.

The control section 23 receives a sensor signal from the copying machine 20 and an operator-instruction signal from the console 21 and produces a control signal for controlling the operation of the copying machine 20 and a status signal in accordance with the status of the copying machine 20. The message-display control section 24 includes an input/output port 31 for fetching the status signal, a status judgement/control unit 32 for judging the status on the basis of the status signal to thereby control the message to be displayed, a message ROM 33 having a message memory 33a storing messages to be displayed and message numbers defined corresponding to the messages and a status memory 33b storing message numbers of the messages to be displayed by the unit of display, and a character generator 34 generating output display signals, for instance, in the well-known 5 x 7 format, for generating character patterns of the message to be displayed.

In this embodiment, although the message memory 33a and the status memory 33b are constituted by one and the same message ROM 33 to provide different memory regions, two ROMs may be individually provided for the same purposes. The drive section 25 is implemented with a shift register 39 controlled by a timing signal of a timing counter 38 for producing a drive signal in accordance with the character pattern of the character generator 34, an X-driver 40 for dot-lighting a display panel 22 in response to the drive signal of the shift register 39, a decoder 41 for providing a timing signal from which is produced a drive signal in accordance with the drive lighting, and a Y-driver 42 for causing the character pattern of the character generator 34 to be dynamically displayed on the basis of the drive signal of the decoder 41.

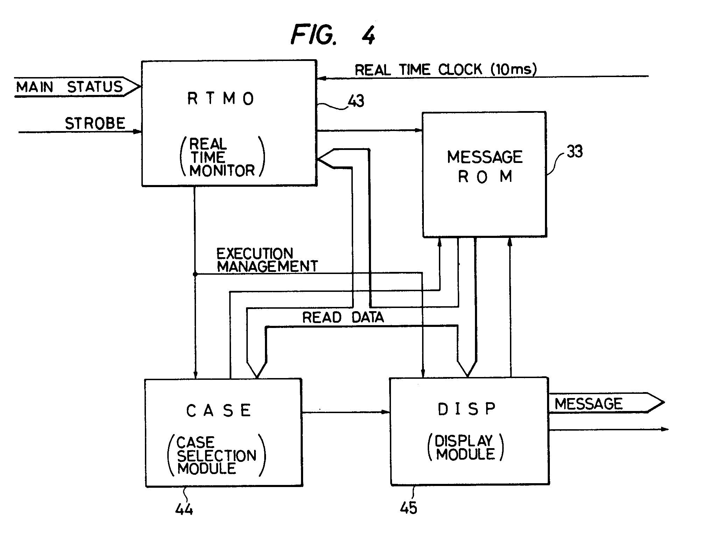

The status judgement/control unit 32 of the message-display control section 24 is constituted by a message control ROM 35 storing programs for processing the status signal to thereby determine the message to be displayed, a CPU 36 for computing/executing the programs, and an output RAM 37 for storing the result of computing. As shown in Fig. 4, the message ROM 35 is constituted by three modules, that is, a real time monitor 43, a case selection module 44, and a display module 45. The real time monitor 43 stores programs for executing the following:

(1) reception and checking of the status signal;
(2) management of the operating time of message control software;
(3) management of the message-output time; and
(4) self-testing upon power-on of the copying machine.

The case selection module 44 stores programs for executing the following:

(1) determination of an output case with respect to the status of the copying machine or the operation by the operator;
(2) determination of a message to be displayed; and
(3) Setting of the output period of time.

The display module 45 stores programs for executing the following:

(1) reading a message out of the message memory; and
(2) output control for the message display section.

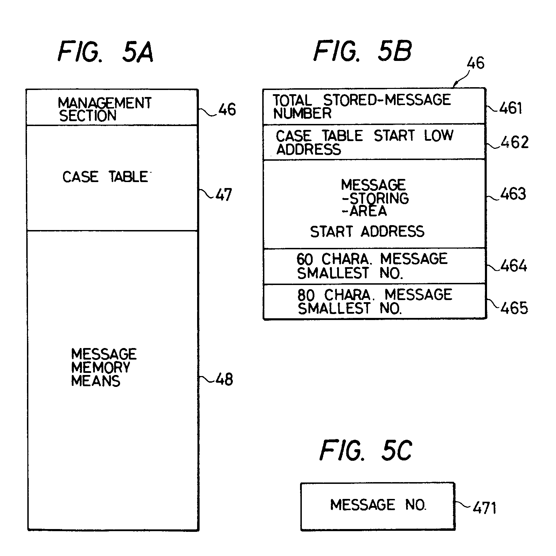

Figs. 5A to 5G show the arrangement of the message ROM 33 implementing the message memory and the status memory. Fig. 5A show an overall memory map of the message ROM 33, the memory area of which is divided among a management section 46, a status memory (hereinafter referred to as a case table) 47, and a message memory 48. Fig. 5B shows the management section 46, which includes a total stored-message number area 461 storing the number of messages to be displayed, a case table start LOW address storing area 462 storing respective start LOW addresses of case tables provided for every unit display for instructing the status of and operation for the copying machine, and a message-storing-area start address storing area 463 storing start addresses of the area in which messages to be displayed are stored.

In this example, messages are allocated to storing areas by the number of characters such that the smallest message number of messages of 41 to 60 characters is stored in an area 464 and the smallest message number of messages of 61 to 80 characters is stored in an area 465.

Fig. 5C shows a case table. Such case tables are prepared by the number corresponding to the possible statuses of the copying machine on the assumption that a message to be displayed in accordance with a status of the copying machine is regarded as one unit. For example, if there are provide 120 messages corresponding to various statuses of the copying machine, there are provided 120 case tables. Fig. 5C shows a single case table in which an area stores the message number of a message to be displayed corresponding to a status.

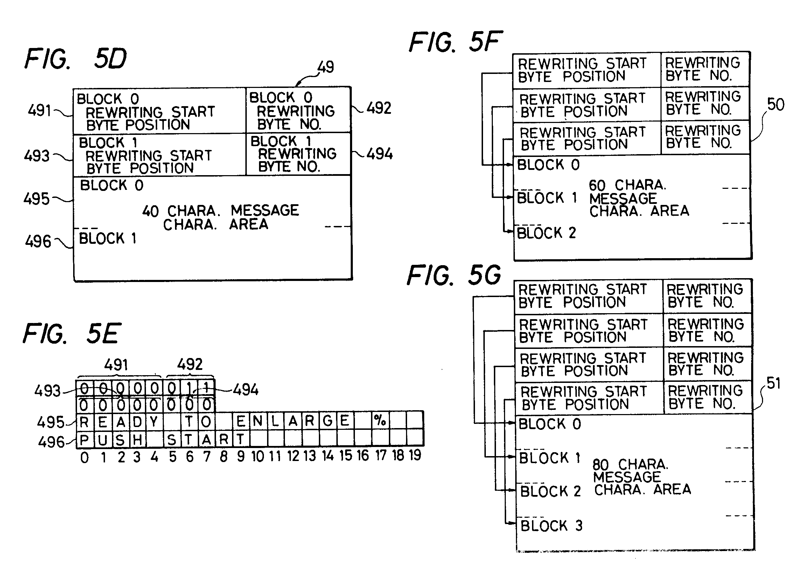

Figs. 5D, 5F and 5G show the arrangement of the message memory section 48 in which messages are stored in areas in accordance with the number of characters of the respective message. This is done due to a limitation on the number of characters of the message which can be displayed. Fig. 5D shows a message memory 49 storing messages of 1 to 40 characters. The memory 49 sores messages to be displayed each having a serial number, that is, an individual message number. In order to reduce the messages to be displayed in number, messages each having a blank portion are also stored so that these messages can be rewritten by an input signal from the console 21. In the case of a message representing a reduction/magnification factor, for example, a message such as "READY TO ENLARGE ___ %, PUSH 'START'" as shown in Fig. 5E (which has a blank portion) is stored so that the reduction/magnification factor, for example, 141%, can be rewritten into the blank portion in response to a reduction/magnification factor signal from the console 21.

The message memory 49 as shown in Fig. 5D has areas 491 and 493 each storing rewriting start byte portions of five bits, areas 492 and 494 each storing the number of rewriting bytes of three bits, and message character sections 495 and 496, respectively, having 20-byte areas for block 0 and 1 messages of 40 characters. The upper areas 491 and 492 control the block 0 of the area 495, and the lower areas 493 and 494 control the block 1 of the area 496. Fig. 5E shows an example of a control sequence in which the rewriting start byte position of the block 0 of the area 495 is determined by a code (00000) of the area 491 and the number of rewriting bytes is determined by a code (011) of the area 492. Figs. 5F and 5G show message memories 50 and 51 storing messages of 60 characters and messages of 80 characters, respectively.

The above-mentioned message number is a serial number given to every message such that each message number corresponds to one specific message. In the case it is intended to enable the device to display a message with a selected one of various languages, for example, when display is to be performed in Japanese for a copying machine for Japan while in English for the United States, one and the same message number is given to the messages having the same meaning. This is done because that message number is used for access in the message display device and because doing so makes it possible to perform display without changing the status judgement/control unit and the case table.

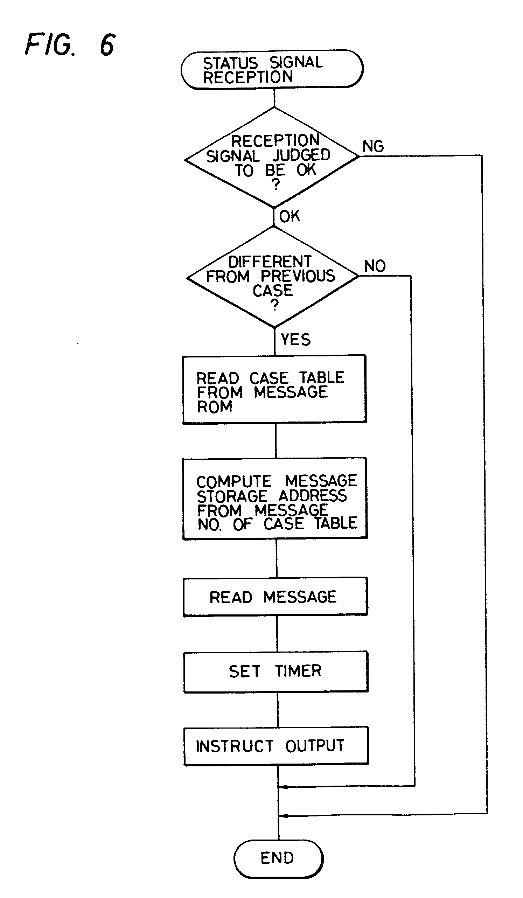

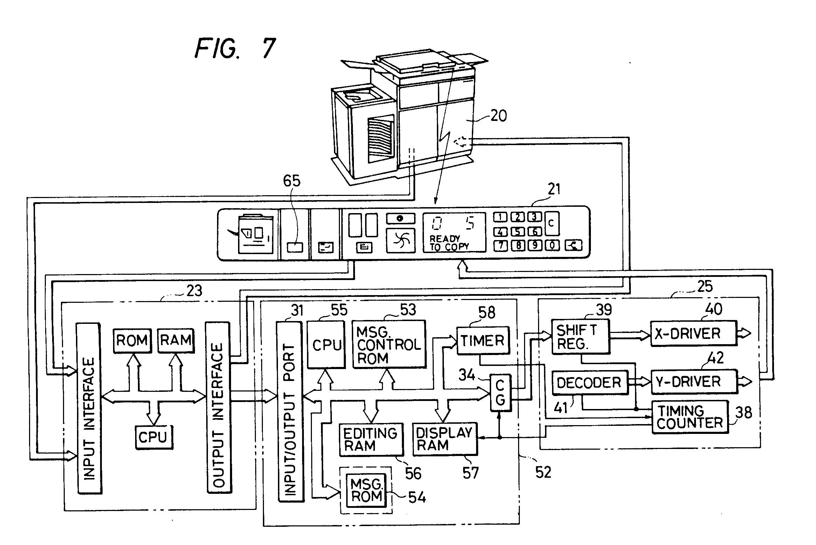

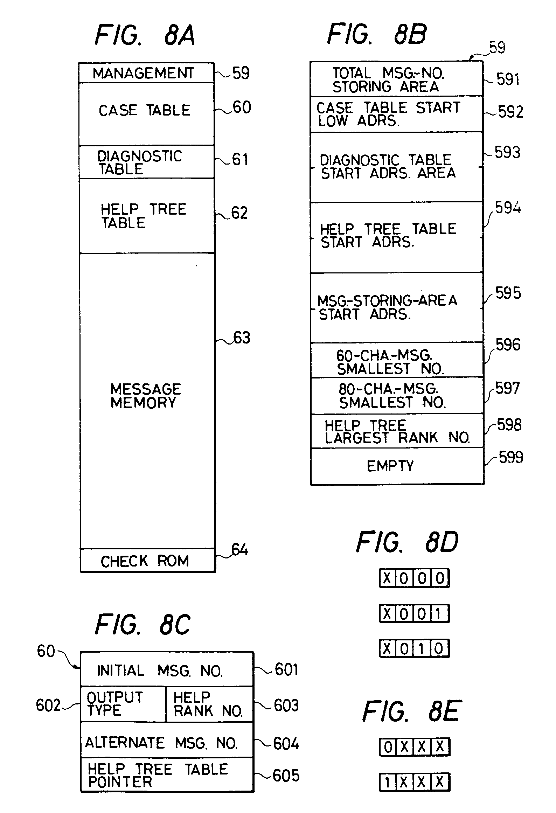

Referring to the flowchart of Fig. 6, the operation of the message display device illustrated in this embodiment will be described hereunder.

When a sensor signal representing the status of the copying machine 20 is inputted to the copying-machine control section 23, a status signal corresponding to the status is applied to the message-display control section 24 under the synchronized condition by a transfer synchronizing signal (information reception). If there is no abnormality such as noise in the received status signal, the reception is judged to be normal. The status signal is processed in the CPU 36 on the basis of the program of the message control ROM 35 of the message-display control section 24 so that the present case is appropriately determined corresponding to the status signal. When this case is judged to be different from the previous case, a case table (Fig. 5C) corresponding to the present case is read out of the message ROM 33 and applied to the output RAM 37. The output RAM 37 is constituted by an editing RAM and a display RAM. The reading out of this case table is performed using an address determined on the basis of storage of the area 462 of the management section 46. The message storage address of the message memory section 48 is computed from the message number of the case table on the basis of the above-mentioned case determination and what is stored in the area 463 of the case table 46. On the basis of the result of this computing, the corresponding message is read into the editing RAM.

Next, after a timer for determining the display time is set, a character code of the message is sent from the display RAM to the character generator 34 which then generates a character pattern, which is in turn read out and applied to the shift register 39. The shift register 39 drives the X-driver 40 and Y-driver 42 and performs dynamic control such that the message is displayed by the display section 22 for a predetermined period of time.

Next, referring to Figs. 7 to 14, an embodiment in which the arrangement of Fig. 2 is employed will be described. In this embodiment, it is made possible to change the output format depending on the status of the apparatus.

Description will be made to an example in which there are three kinds of output formats and two kinds of display modes. Messages to be displayed are classified into the following three kinds of output formats:

(1) standard messages (hereinafter referred to as initial messages) outputted in accordance with instructions from the operator or the status of the apparatus;

(2) messages (hereinafter referred to as help messages) for explaining the status of the apparatus or the operations to be performed by the operator in more detail in comparison with the initial messages; and

(3) messages (hereinafter referred to as diagnostic messages) for diagnostic tests provided in the apparatus in maintenance or checking of the apparatus.

The display modes include the following:

(1) a display mode (hereinafter referred to as scroll display) in which a message of characters which exceeds the display limit in the number of characters at the message display section is divided into character units, each having characters of a number within the display limit, so that the message is displayed as the character units; and

(2) a display mode (hereinafter referred to as alternate display) in which, when there are plurality of messages for one status, these messages are displayed alternately.

Fig. 7 shows an embodiment of the arrangement of Fig. 2, which includes a message display section 22, a copying-machine control section 23, and a drive section 25. Since these sections are the same as those shown in Fig. 3, a further description thereof is omitted here. The same reference numerals as those used in Fig. 3 are used here to represent the same components.

A message-display control section 52 includes an input/output port 31 receiving a status signal; a message control ROM 53 storing programs for processing the status signal to determine the message number, etc., for the message to be displayed, a message ROM 54 storing case tables, etc., or predetermined messages to be displayed in the form of trains of character codes; a CPU 55 for processing the status signal on the basis of the program of the message control ROM 53, reading a message out of the message ROM 54 on the basis of an address determined on the basis of the message number of a message corresponding to the status of the copying machine 20, and for determining the display code of the read-out message (for example, a display format as to whether the message be displayed at the same time or be displayed in a scroll mode, the display timing, the display time, etc.,); an editing RAM 56 for editing the message read out of the message ROM 54 into a message to be displayed; a display RAM 57 for storing for display the message edited by the editing RAM 57; a non-display timer 58 for preventing different messages from being continuously displayed to thereby eliminating visual difficulty because of residual images; and a character generator 34 generating character patterns, for example, in a 5 x 7 dot format, of the message to be displayed on the basis of the stored contents of the display RAM 57. Differing from Fig. 3, the message control ROM 53 has, in a case selection module, a program for setting output formats, and the message ROM 54 contains, for every case, the message numbers of messages to be displayed together with the output formats thereof. Further, the console 21 is provided with a help button 65 for requesting a help message.

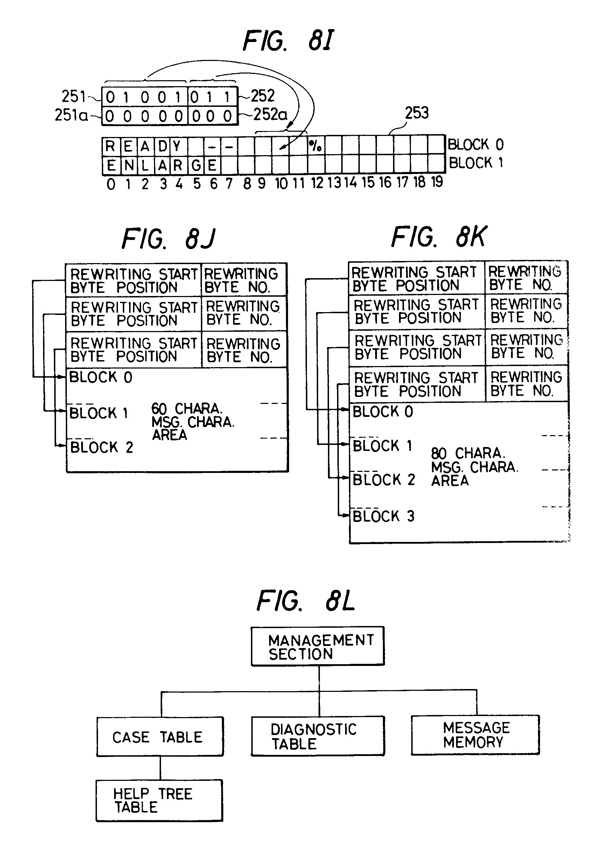

Fig. 8A to 8L show the arrangement of the message ROM 54. Fig. 8A shows an overall memory map including a management section 59, a case table 60, a diagnostic table section 6, a help tree table 62, a message memory section 63, and a check sum 64. Description will be made as to the individual components. Fig. 8B shows the management section 59 including a total message-number storing area 591 which stores the number of messages to be displayed, a case-table start LOW address storing area 592 which stores start LOW addresses of a case table provided for every case indicating the status of and/or operation for the copying machine, a diagnostic table start address storing area 593 storing addresses of a diagnostic table which is provided for every diagnostic mode necessary for maintenance of the copying machine or the like and which stores message numbers of diagnostic messages, a help tree table start address storing area 594 which stores start addresses of a help tree table storing the message numbers of help messages to be displayed upon depression of the help button 65 by the operator, a message-storing-area start address storing area 595 storing start addresses of the area which stores messages to be displayed, a 60-character-message smallest message number storing area 596 storing the smallest message number of messages of 41 to 60 characters, a 80-character-message smallest message number storing area 597 storing the smallest message number of messages of 61 to 80 characters, a help-tree largest rank number storing area 598 storing the largest value of rank number determined by the number of times of depression of the help button 65, and an empty byte 599.

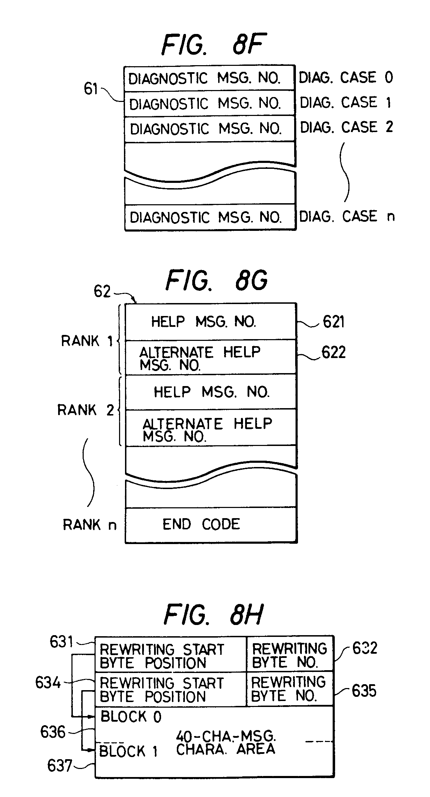

Fig. 8C shows a case table provided for every case in which the status of and/or operating instruction for the copying machine is judged on the basis of the program of the message control ROM 53. In the case table, an area 601 stores initial-message numbers of messages to be displayed corresponding to the various possible cases, an area 602 stores the kind of an alternate mode (a mode in which a plurality of messages are displayed alternately), an area 603 stores message rank numbers defining a display message on the basis of the number of times of depressing of the help button when the operator depresses the help button 65 in accordance with the status of the copying machine, an area 604 stores message numbers of alternate messages to be alternately displayed in place of an initial message, and an area 605 stores help tree pointers designating help tree tables which will be described later. As to the output mode stored in the area 602, as shown in Fig. 8D, there is a mode of fixed display (display of only an initial message) when the lower three bits are "000", another mode of alternate-1 display (two messages, that is an initial message and an alternate message, are alternately displayed for 60 seconds) when the lower three bits are "000", and a further mode of alternate-2 display (two messages, that is an initial message and an alternate message, are alternately displayed three times) when the lower three bits are "010". Upon completion of the alternate display, an initial message is displayed when the most significant bit is "0", while an alternate message is displayed when the most significant bit is "1", as shown in Fig. 8E. Fig. 8F shows the diagnostic table 61 for indexing a diagnostic message number in which message numbers correspond to the respective diagnostic cases 0, 1, 2 ... n. Fig. 8G shows the help tree table 62 which stores message numbers of the messages, corresponding to the number of times of depression of the help button 65, in the order of the ranks 1, 2, ... n, and which is provided with an area 621 storing a message number of a help message first produced at each of the respective ranks and another area 622 storing message numbers of messages, each of which is alternately displayed with a help message.

Figs. 8H, 8I, 8J and 8K show the message memory section, which is arranged in the same manner as that shown in Figs. 5D, 5F and 5G. Fig. 8L shows the relation among the areas described above. This relation is apparent from the drawing, and therefore a further description will be omitted.

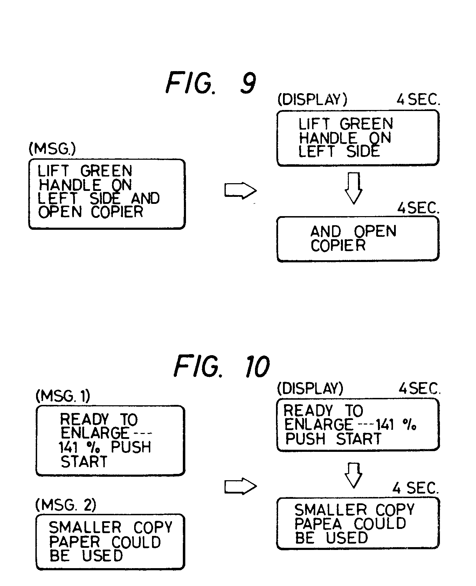

Figs. 9 and 10 show message display modes. Fig. 9 shows a scroll mode, while Fig. 10 shows an alternate mode. In the scroll mode, when the number of the characters of a message to be displayed exceeds a predetermined character number (for example, 40 characters), the message is divided into a plurality of, for example, two, portions which are time-divisionally displayed. For example, a message to be displayed "LIFT GREEN HANDLE ON LEFT SIDE AND OPEN COPIER" is divided into two portions "LIFT GREEN HANDLE ON LEFT SIDE AND" and "OPEN COPIER", and each of the two portions is displayed for 4 seconds. In the alternate mode, on the other hand, for example, a first or initial message "READY TO ENLARGE ... 141% PUSH 'START'" and a second or alternate message "SMALLER COPY PAPER COULD BE USED" are alternately displayed each for 4 seconds.

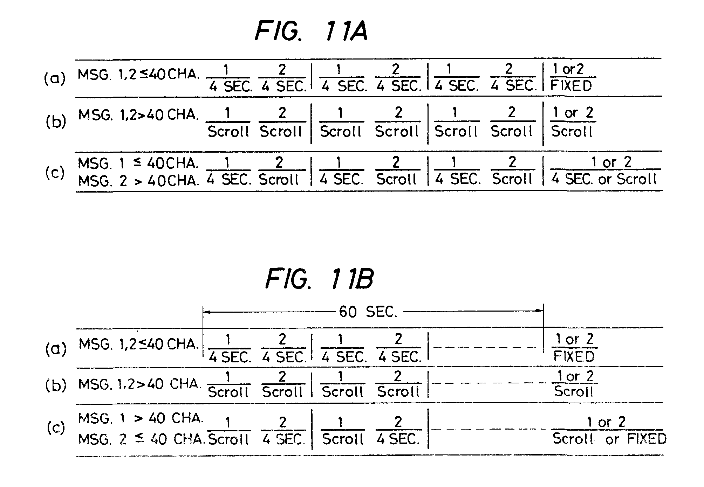

Figs. 11A and 11B illustrate two kinds of alternate modes. Fig. 11A illustrates the above-mentioned alternate-2 display mode in which, after a first message 1 and a second message 2 are alternately displayed three times, each for 4 seconds, the first message 1 or the second message 2 is finally fixedly displayed. Fig. 11B depicts the above-mentioned alternate-1 display mode in which, after a first message 1 and a second message 2 are alternately displayed each for 4 seconds during a 60 second period, the first message 1 or the second message 2 is finally fixedly displayed. As seen in the drawings, in Fig. 11A, (a) indicates the case where each of the first and second messages has 40 or less characters, (b) the case where each of the first and second messages has more than 40 characters, and (c) the case where the first messages has 40 or less characters while the second message has more than 40 characters. (In this drawing, MSG is an abbreviation of "MESSAGE".) In (b) and (c), the message having more than 40 characters is displayed in the scroll mode. As to the case of Fig. 11B, a further description is omitted because this case is more self-explanatory than that of Fig. 11A.

Other than the examples as shown in Figs. 11A and 11B, the alternate mode can be effected such that, for example, alternate display is continued for 4 minutes or display of a status of the copying machine is continued until the status changes. This alternate mode is stored in the area 602 of Fig. 8C.

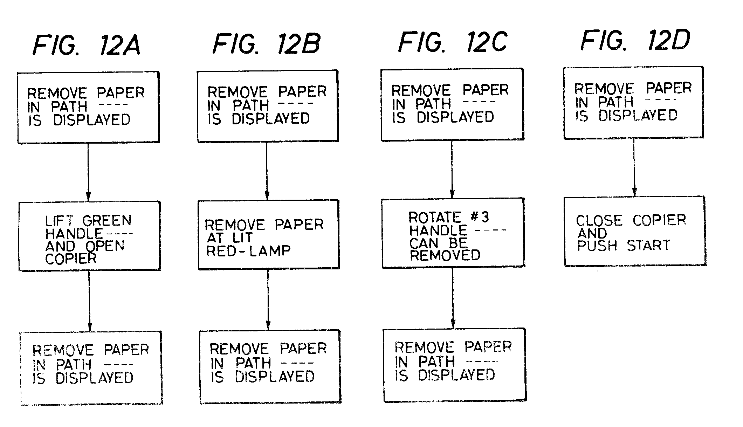

Figs. 12A to 12D show the help mode. This help mode is employed when measures needed to be applied to the copying machine cannot be understood by only initial or alternate messages. In this case, a message for explaining the needed measures in detail is displayed as a help message. Such a help message may be advantageously requested on one occasion and not on another occasion depending on the level of skill of the operator, and therefore the help mode display is only started upon depression of the help button 65 on the console 21 of the copying machine 20.

Figs. 12A to 12D show examples of output messages to be displayed when a paper jam has occurred in the copying machine. The message are as follows:

Message A: "REMOVE PAPER IN PATH ... PUSH 'HELP' AND MEASURE IS DISPLAYED"

Message B: "LIFT GREEN HANDLE ON LEFT SIDE AND OPEN COPIER"

Message C: REMOVE PAPER AT LIT RED-LAMP"

Message D: "ROTATE *3-HANDLE RIGHT AND PAPER CAN BE REMOVED"

Message E: "CLOSE COPIER AND PUSH 'START'"

The message A is an initial message which is to be intially displayed in accordance with the status of the copying machine, while messages B to E are help messages which are to be displayed upon depression of the help button 65. When a paper jam occurs, the message A is displayed. When the operator cannot understand the needed measure by this message A, he may push the help button 65 so that the message B is displayed. Upon completion of the display of this message B, the message A is displayed again (Fig. 12A). If the operator pushes the help button 65 again, the message C is displayed, and thereafter the message A is displayed again (Fig. 12B). If the operator does not yet understand the needed measure upon reading the messages A to C, he may again push the help button 65 (the third depression) so that the message D is displayed. Thereafter, the message A is displayed again (Fig. 12C). If the operator effects the fourth depression of the help button 65, the message E is displayed and the help display is terminated with the display of the message E because there is no further help message (Fig. 12D).

Thus, the help system is arranged such that the help message displayed on depression of the help button 65 is changed depending on the number of times of depression and such that the help rank numbers or the number of times of depression of the help button and the help tree table pointer or the message numbers of messages to be displayed in accordance with the number of times of depression are stored in the areas 603 and 605 in the case table section 60 as shown in Fig. 8C so that a help messages stored in the help tree table section 62 is displayed on the basis of this case table.

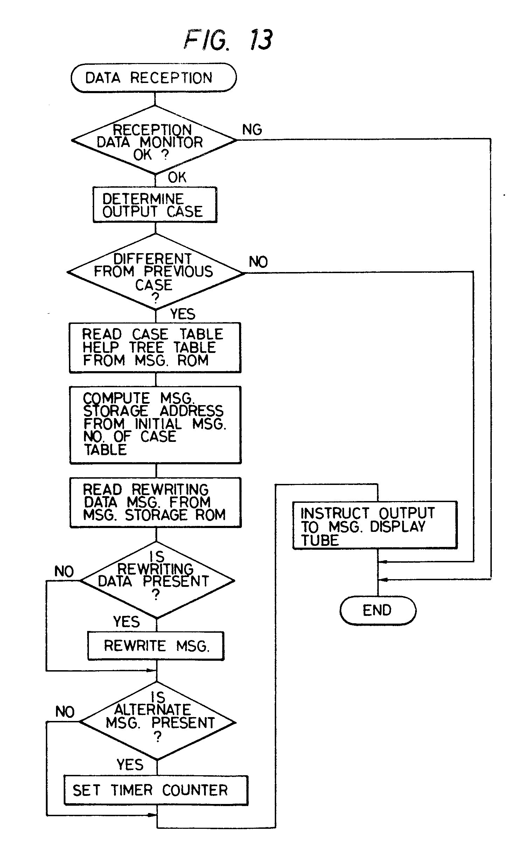

Referring to the flowchart of Fig. 13, the operation of the message display device having the arrangement as described above will be explained hereunder.

When a sensor signal representing the status of the copying machine 20 is inputted from a sensor of the copying machine 20 into the copying-machine control section 23, a status signal corresponding to the status is outputted synchronously to the message-display control section 52 synchronized (information reception). If there is no abnormality present such as noise in the received status signal, the reception is judged to be normal during received information checking.

The status signal is processed in the CPU 55 on the basis of the program of the message control ROM 52 of the message-display control section 52 so that a present case is determined corresponding to the status signal. When this case is judged to be different from the previous case, a case table (Fig. 8C) corresponding to the case is read out of the message ROM 54 and applied to the editing RAM 57, and at the same time, the help tree table (Fig. 8G) is read out on the basis of the help table pointer of the area 605 of the case table and applied to the editing RAM 56.

The reading-out of these cases and help tree tables is performed in accordance with addresses determined on the basis of the content of the areas 592 and 594 of the management table (Fig. 8B). The address of the message corresponding to the initial message number of the case table area 601 is determined on the basis of the above-mentioned determination of case and the storage of the areas 595, 596 and 597 in the management section 59. When a corresponding message is read into the editing RAM 56 on the basis of this determination, a message to be displayed is edited on the basis of the output mode 602 of the case table, the help rank number 603, rewriting memory contents 631 and 632 of the message memory section 63.

The message to be displayed is written into the display RAM 57. For example, if an alternate message is included in a message to be displayed, a 4-second timer for performing the alternate display is set (similarly, the 4-second timer is set when it is necessary to effect scroll display, and the number of times of alternate display is counted by a counter when 3-times alternate display is performed). When a code of 40 characters constituting an initial message is transferred to the character generator 34 from the display RAM 57, the character generator 34 produces a character pattern which is read into the shift register 39.

The shift register 39 drives the X-driver 40 and Y-driver 42, which perform control of the dynamic lighting, so that the initial message is displayed by the display section 22. Upon completion of timing operations of the 4-second timer, the alternate message is read out and displayed at the display section 22 in the same manner as above. Which one of the alternate modes selected between those shown in Figs. 11A and 11B is determined on the basis of the contents of the area 602 of the case table (Fig. 8D). The message to be fixedly displayed upon completion of the alternate display is determined also on the basis of the contents of this area 602 (Fig. 8E). Further, on the basis of the contents of the area 603 of the case table, the display of the help messages as shown in Figs. 12A to 12D is controlled.

If the timing operation of the above-mentioned 4-second timer for the alternate display terminates during the output of the first half of a message of 60 to 80 characters, a message address bias, for example, corresponding to four addresses, is added, and the last half of the message is read out from the message ROM 54 into the display RAM 57 through the editing RAM 56 and then outputted therefrom, and the 4-second timer is newly set. If the timing operation of the above-mentioned 4-second timer terminates during the output of the last half, the address of the message which is not now being displayed is obtained on the basis of the initial message numbed and the alternate message number so that the message is read out of the message ROM 54 into the display RAM 57 through the editing RAM 56 and then outputted in the same manner as above, and the 4-second timer is newly set.

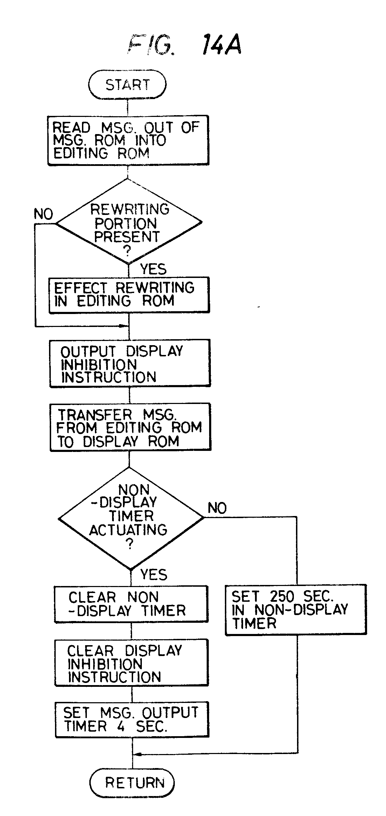

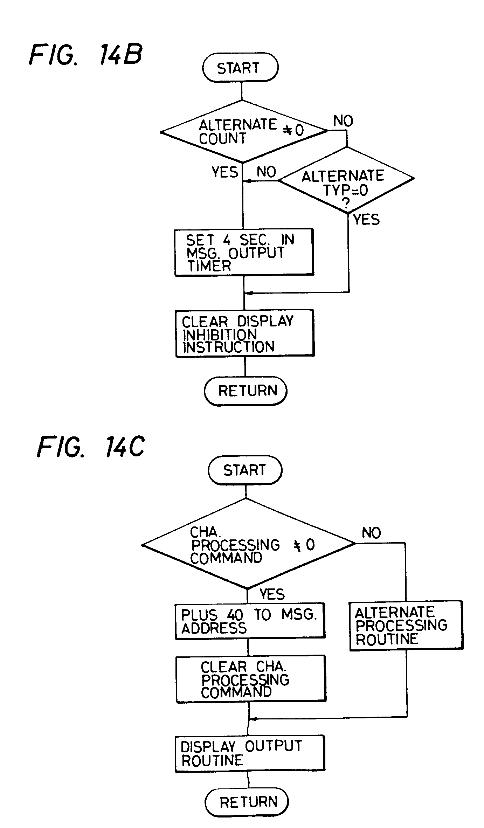

In this manner, a message is displayed in one of the various output formats in accordance with the status signal. Further, referring to Figs. 8A to 8L and 14A to 14C, description will be made with respect to the display output routine (Fig. 14A), the time-out routine (Fig. 14B) of the non-display timer 58 of the message-display control section 52, and the time-out routine (Fig. 14C) of a message output timer (not shown). In Fig. 14A, a message to be displayed is read out of the message ROM 54 into the editing RAM 56 and, if it is necessary to rewrite the message, rewriting is effected as shown in Figs. 8H and 8I. Although the rewritten message to be displayed is written into the display RAM 57 from the editing RAM 56, a display inhibition instruction is issued prior to the writing of the rewritten message to inhibit display during the writing operation. If the non-display timer 58 is operating when the message to be displayed has been written into the display RAM 57, the non-display timer 58 and the display-inhibition instruction are cleared and the message output timer is set to 4-seconds. The message to be displayed is displayed for these 4 seconds by the display section 22. If the non-display timer 58 is not operating when the message to be displayed has been written into the display RAM 57, on the other hand, the non-display timer 58 is set to 250 milliseconds in order to avoid the influence of the residual image of the preceding display. When the thus-set 250 milliseconds of non-display time has elapsed, the message output timer is set in accordance with Fig. 14B. This is effected by the message which is now being displayed on the basis of the count of the alternate counter and the existence of an alternate mode. In the case only an initial message is being fixedly displayed, the count of the alternate counter is zero, and since the alternate mode is "0" or does not exist, the message output timer is not set. In the case of an alternate message, on the other hand, the count of the alternate counter is not zero and the message output timer is set. In the case of a scroll display message, since the alternate mode is not "0" while the count of the alternate counter is zero, the message output timer is set. Further, in the case where a message is to be displayed in the alternate and scroll modes, the count of the alternate counter is not zero and the message output timer is set in the same manner as above. When the message output timer is set in this manner, the display inhibition instruction is released and the operation is shifted again to Fig. 14A.

Fig. 14C shows a flowchart for selecting a message to be displayed next in which a character processing command is checked, and in the case where a message is being displayed in the scroll mode. If the character processing command is not "0", that is, when the message being displayed has 40 or less characters, 40 is added to the message address in order to index 41 to 80 characters. In the case where the character processing command is zero, since the scroll mode has been terminated, the operation is shifted to the alternate processing routine and the message number of a message to be displayed next or the message number of a message to be fixedly displayed is determined.

In the case of an alternate message, the character processing command is zero and the operation is shifted to the alternate processing routine. Thereafter, the operation is shifted again to Fig. 14A.

In the thus-arranged message display device according to the present invention, in order to enable the display to be effected with a selected one of various available languages, for example, Japanese, English, French, German, etc., only the message memory (the message ROM 33/54) need be changed. In this case, one and the same message number is given to all messages having the same meaning. When any message is altered, only the message is altered, and its message number remains the same. Further, when messages to be displayed and/or output formats thereof are changed because of changes in specification, etc., of the apparatus, only the by-status-message memory is changed. That is, since a message corresponding to one case is stored in each of, a plurality of message ROMs corresponding to respective various languages with one and the same message number, it is sufficient for the CPU 36/55 to use the single program of the message ROM 35/53.

Even in the case where, for example, the help message "LIFT GREEN HANDLE ON LEFT SIDE AND OPEN COPIER" is altered into "LIFT RED HANDLE ON LEFT SIDE AND OPEN COPIER", or in more detail, the help message "REMOVE ALL PAPER IN COPIER" is altered to "REMOVE PAPER AT LOCATION A IN COPIER", the altered message is stored in the message ROM with the same message number as that of the initial message so that the CPU 36/55 can read a message corresponding to the case at hand from the message ROM 33/54 on the basis of the common program of the message control ROM 35/53.

As described in detail above, the message display device according to the present invention is arranged such that an apparatus control section for controlling a copying machine or the like and a message-display control section for controlling messages to be displayed are separated from each other, and the message-display control section is divided into a message, a status memory, and a status judgement/control unit so that the message memory and the status judgement/control unit can be accessed by a message number of the status memory.

With this arrangement, in the case where a language to be displayed is changed, a message to be displayed is altered, or an output mode is changed, it is sufficient to change only the message memory or the status memory without changing the apparatus control section, the program of the display control section, etc., whereby it is possible to provide a message display device with high exchangeability and with less exchange of parts. Further, output formats corresponding to messages to be displayed are stored in the status memory so that it is made possible to designate an output format and to change the display mode between messages in accordance with the status.

## Claims

1. A message display device for displaying a message representing the status of an electronic apparatus and/or operating instructions for the electronic apparatus, said device comprising: an apparatus control section (1) for controlling said electronic apparatus and generating a status signal representing a status of said apparatus; a message display control section (2, 11) responsive to said status signal for selecting a message to be displayed from among previously stored messages and for producing a display pattern signal on the basis of the selected message to be displayed; and a message display section responsive to said display pattern signal for displaying the selected message to be displayed; said message display control section (2, 11) further comprising: status memory means (4, 13) for storing message numbers of messages to be displayed for every unit display; message memory means (5, 14) for storing messages to be displayed and corresponding message numbers; and status judgement/control means (3, 12) comprising status judgement means (7, 15) for judging said status on the basis of the status signal, message number detecting means (8, 16) for detecting the message number of the message to be displayed, message selecting means (9, 18) for selecting a message corresponding to the message number and display instruction means (10, 19) for issuing an output instruction; said device operating such that said status judgement means (7, 15) judges the status in response to the status signal generated by said apparatus control section, and on the basis of this judgement the message number of the message to be displayed corresponding to the judged status is read out from the status memory means (4, 13), the message to be displayed corresponding to that message number is selected out of the message memory (5, 14) and an instruction is issued to the message display section (6) to instruct it to display the selected message.

2. A message display device according to claim 1, wherein said status memory means stores, for every unit display, in addition to the message numbers of messages to be displayed, corresponding output format data for controlling display formats of the messages.

3. A message display device according to claim 1 or claim 2, wherein said message memory means (5, 14) stores said messages to be displayed such that messages of various languages having the same meaning are stored with the same message number.

4. A message display device as claimed in claim 2, wherein said status judgement/control means (12) further comprises an output format detecting means (17) for reading output format data from said status memory means (13), the format in which the message is displayed by the message display section (6) being determined by said output format data.

5. A message display device as claimed in claim 4, in which at least some of the messages stored in said message memory means (14) have a blank portion therein which can be rewritten by an input signal.

## Revendications

1. Un dispositif d'affichage de messages pour l'affichage d'un message représentant l'état d'un appareil électronique et/ou des instructions de service pour l'appareil électronique, ledit dispositif comprenant: une section de commande de l'appareil (1) pour la commande du dit appareil électronique et pour engendrer un signal d'état représentant un état du dit appareil; une section de commande de l'affichage de messages (2, 11), réagissant au dit signal d'état en vue de la sélection d'un message à afficher parmi des messages enregistrés auparavant et en vue de produire un signal de configuration d'affichage sur la base du message sélectionné à afficher; et une section d'affichage de messages réagissant au dit signal de configuration d'affichage pour afficher le message sélectionné à afficher; ladite section de commande de l'affichage de messages (2, 11) comprenant en outre un moyen de mémoire d'état (4, 13) pour enregistrer les numéros de message des messages à afficher pour chaque unité d'affichage; un moyen de mémoire de messages (5, 14) pour enregistrer des messages à afficher ainsi que les numéros de message correspondants; ainsi qu'un moyen d'appréciation/de commande d'état (3, 12) comprenant un moyen d'appréciation de l'état (7, 15) pour apprécier ledit état sur la base du signal d'état, un moyen de détection (8, 16) pour détecter le numéro du message à afficher, un moyen de sélection de message (9, 18) pour sélectionner un message correspondant au numéro de message ainsi qu'un moyen d'instruction d'affichage (10, 19) pour sortir une instruction de sortie; ledit dispositif fonctionnant de sorte que ledit moyen d'appréciation d'état (7, 15) apprécie l'état en réponse au signal d'état engendré par ladite section de commande de l' appareil, et le numéro de message du message à afficher correspondant à l'état apprécié est extrait du moyen de mémoire d'état (4, 13) sur la base de cette appréciation, le message à afficher correspondant à ce numéro de message est sélectionné dans la mémoire de messages (5, 14) et une instruction est sortie vers la section d'affichage de messages (6) pour lui ordonner d'afficher le message sélectionné.

2.  Un dispositif d'affichage de messages selon la revendication 1, dans lequel ledit moyen de mémoire d'état enregistre, pour chaque unité d'affichage, en plus des numéros de message des messages à afficher, des données de format de sortie pour le contrôle des formats d'affichage des messages.

3.  Un dispositif d'affichage de messages selon la revendication 1 ou la revendication 2, dans lequel ledit moyen de mémoire de messages (5, 14) enregistre lesdits messages à afficher de sorte que des messages en différentes langues ayant la même signification sont enregistrés avec le même numéro de message.

4.  Un dispositif d'affichage de messages selon la revendication 2, dans lequel ledit moyen d'appréciation/de commande d'état (12) comprend en outre un moyen de détection du format de sortie (17) pour extraire du dit moyen de mémoire d'état les données de format de sortie (13), le format dans lequel le message est affiché par la section d'affichage de messages (6) étant déterminé par lesdites données de format de sortie.

5.  Un dispositif d'affichage de messages selon la revendication 4, dans lequel au moins certains des messages enregistrés dans ledit moyen de mémoire de messages (14) comportent une partie en blanc, pouvant être récrite par un signal d'entrée.

**Patentansprüche**

1.  Nachrichtenanzeigevorrichtung zur Anzeige einer Nachricht, die den Status eines elektronischen Geräts und/oder Betriebsinsturktionen für das elektronische Gerät repräsentiert, wobei die Vorrichtung folgende Komponenten umfaßt: einen Gerätesteuerungsabschnitt (1) zur Steuerung dieses elektronischen Geräts und zum Generieren eines Statussignals, das den Status dieses Geräts repräsentiert; einen Nachrichtenanzeigesteuerungsabschnitt (2, 11), der entsprechend dem Statussignal aus zuvor abgespeicherten Nachrichten eine anzuzeigende Nachricht auswählt und der ein Anzeigemustersignal auf der Grundlage der ausgewählten, anzuzeigenden Nachricht erzeugt; und einen Nachrichtenanzeigeabschnitt, der entsprechend dem Anzeigemustersignal die ausgewählte, anzuzeigende Nachricht auswählt; wobei der Nachrichtenanzeigesteuerungsabschnitt (2, 11) weiterhin eine Statusspeichereinheit (4, 13) umfaßt, die Nachrichtenzahlen der anzuzeigenden Nachrichten für jede Einheitsanzeige abspeichert; eine Nachrichtenspeichereinheit (5, 14), die anzuzeigende Nachrichten und korrespondierende Nachrichtenzahlen abspeichert, und eine Statusbewertungs-/steuerungseinheit (3, 12), die eine Statusbewertungseinheit (7, 15) zur Bewertung dieses Status auf der Grundlage des Statussignals umfaßt, eine Nachrichtenzahlerkennungseinheit (8, 16) zur Erkennung der Nachrichtenzahl der anzuzeigenden Nachricht, eine Nachrichtenauswahleinheit (9, 18) zur Auswahl einer Nachricht entsprechend der Nachrichtenzahl und eine Anzeigeinstruktionseinheit (10, 19) zur Ausgabe einer Ausgabeinstruktion; wobei diese Vorrichtung in der Weise arbeitet, daß die Statusbewertungseinheit (7, 15) den Status entsprechend dem von dem Gerätesteuerungsabschnitt generierten Statussignal bewertet und daß auf der Grundlage dieser Bewertung die Nachrichtenzahl der anzuzeigenden Nachricht entsprechend dem bewerteten Status aus der Statusspeichereinheit (4, 13) ausgelesen wird, daß die anzuzeigende Nachricht entsprechend dieser Nachrichtenzahl aus dem Nachrichtenspeicher (5, 14) ausgewählt wird und daß dem Nachrichtenanzeigeabschnitt (6) eine Instruktion zugeführt wird, um die ausgewählte Nachricht anzuzeigen.

2.  Nachrichtenanzeigevorrichtung nach Anspruch 1,
    **dadurch gekennzeichnet,**
    daß die Statusspeichereinheit für jede Einheitsanzeige zusätzlich zu den Nachrichtenzahlen der anzuzeigenden Nachrichten korrespondierende Ausgabeformatdaten zur Steuerung der Nachrichtenanzeigeformate abspeichert.

3.  Nachrichtenanzeigevorrichtung nach Anspruch 1 oder 2,
    **dadurch gekennzeichnet,**
    daß die Nachrichtenspeichereinheit (5, 14) diese anzuzeigenden Nachrichten in der Weise abspeichert, daß die Nachrichten in verschiedenen Sprachen mit derselben Bedeutung unter derselben Nachrichtenzahl abgespeichert werden.

4. Nachrichtenanzeigevorrichtung nach Anspruch 2,
**dadurch gekennzeichnet,**
daß diese Statusbewertungs-/steuerungseinheit (12) weiterhin eine Ausgabeformaterkennungseinheit (17) zum Lesen von Ausgabeformatdaten auf dieser Statusspeichereinheit (13) umfaßt, und daß das Format, in dem die Nachricht von dem Nachrichtanzeigeabschnitt angezeigt wird, von diesen Ausgabeformatdaten bestimmt wird.

5. Nachrichtenanzeigevorrichtung nach Anspruch 4,
**dadurch gekennzeichnet,**
daß wenigstens ein Teil der in der Nachrichtenspeichereinheit (14) abespeicherten Nachrichten einen freien Bereich aufweisen, der durch ein Eingabesignal neu beschrieben werden kann.

## FIG. 1

EP 0 147 936 B1

## FIG. 2

Diagram showing the MESSAGE-DISPLAY CONTROLLER (11) containing:

- STATUS MEMORY (13):
  - OUTPUT FORMAT MEMORY SECTION
  - MESSAGE NUMBER MEMORY SECTION
- MESSAGE MEMORY (14)
- STATUS JUDGEMENT / CONTROL UNIT (12):
  - STATUS JUDGEMENT SEC. (15)
  - MESSAGE-NUMBER DETECTING SEC. (16)
  - OUTPUT-FORMAT DETECTING SEC. (17)
  - MESSAGE SELECTING SEC. (18)
  - DISPLAY INSTRUCTION SEC. (19)
- APPARATUS CONTROL SECTION (1)
- MESSAGE DISPLAY SECTION (6)

EP 0 147 936 B1

EP 0 147 936 B1

FIG. 3

TRANSFER SYNC. SIGNAL

FIG. 4

MAIN STATUS

STROBE

RTMO
(REAL
TIME
MONITOR)

43

REAL TIME CLOCK (10ms)

MESSAGE
ROM

33

EXECUTION
MANAGEMENT

READ DATA

CASE
(CASE
SELECTION
MODULE)

44

DISP
(DISPLAY
MODULE)

MESSAGE

45

EP 0 147 936 B1

## FIG. 5A

| |
|---|
| MANAGEMENT SECTION ~46 |
| CASE TABLE ~47 |
| MESSAGE MEMORY MEANS ~48 |

## FIG. 5B

46

| |
|---|
| TOTAL STORED-MESSAGE NUMBER ~461 |
| CASE TABLE START LOW ADDRESS ~462 |
| MESSAGE -STORING -AREA START ADDRESS ~463 |
| 60 CHARA. MESSAGE SMALLEST NO. ~464 |
| 80 CHARA. MESSAGE SMALLEST NO. ~465 |

## FIG. 5C

| |
|---|
| MESSAGE NO. ~471 |

## FIG. 5D

49

| BLOCK 0 REWRITING START BYTE POSITION | BLOCK 0 REWRITING BYTE NO. |
|---|---|
| 491 | 492 |
| BLOCK 1 REWRITING START BYTE POSITION | BLOCK 1 REWRITING BYTE NO. |
| 493 | 494 |
| BLOCK 0 | |
| 495      40 CHARA. MESSAGE CHARA. AREA    --- | |
| 496   BLOCK 1 | |

## FIG. 5E

491     492

493 — | 0 | 0 | 0 | 0 | 0 | 0 | 1 | 1 | — 494
| 0 | 0 | 0 | 0 | 0 | 0 | 0 | 0 |

495 — | R | E | A | D | Y | | T | O | | E | N | L | A | R | G | E | | % | | |

496 — | P | U | S | H | | S | T | A | R | T | | | | | | | | | | |

0 1 2 3 4 5 6 7 8 9 10 11 12 13 14 15 16 17 18 19

## FIG. 5F

| REWRITING START BYTE POSITION | REWRITING BYTE NO. |
|---|---|
| REWRITING START BYTE POSITION | REWRITING BYTE NO. |
| REWRITING START BYTE POSITION | REWRITING BYTE NO. |
| BLOCK 0 | |
| ---    60 CHARA. | |
| BLOCK 1   MESSAGE CHARA. AREA | |
| BLOCK 2         --- | |

50

## FIG. 5G

| REWRITING START BYTE POSITION | REWRITING BYTE NO. |
|---|---|
| REWRITING START BYTE POSITION | REWRITING BYTE NO. |
| REWRITING START BYTE POSITION | REWRITING BYTE NO. |
| REWRITING START BYTE POSITION | REWRITING BYTE NO. |
| BLOCK 0 | |
| --- | |
| BLOCK 1   80 CHARA. MESSAGE | |
| BLOCK 2   CHARA. AREA    --- | |
| BLOCK 3        --- | |

51

*FIG. 6*

```
        ┌─────────────────────┐
        │   STATUS SIGNAL     │
        │   RECEPTION         │
        └─────────────────────┘
                  │
                  ▼
             ╱─────────╲
            ╱ RECEPTION ╲         NG
           ╱ SIGNAL JUDGED╲──────────────┐
           ╲  TO BE OK    ╱               │
            ╲    ?       ╱                │
             ╲─────────╱                  │
                  │ OK                     │
                  ▼                        │
             ╱─────────╲                   │
            ╱ DIFFERENT ╲       NO          │
           ╱FROM PREVIOUS╲───────────┐     │
           ╲   CASE      ╱           │     │
            ╲    ?      ╱            │     │
             ╲─────────╱             │     │
                  │ YES              │     │
                  ▼                  │     │
        ┌─────────────────────┐      │     │
        │ READ CASE TABLE     │      │     │
        │ FROM MESSAGE        │      │     │
        │ ROM                 │      │     │
        └─────────────────────┘      │     │
                  │                   │     │
                  ▼                   │     │
        ┌─────────────────────┐      │     │
        │ COMPUTE MESSAGE     │      │     │
        │ STORAGE ADDRESS     │      │     │
        │ FROM MESSAGE        │      │     │
        │ NO. OF CASE TABLE   │      │     │
        └─────────────────────┘      │     │
                  │                   │     │
                  ▼                   │     │
        ┌─────────────────────┐      │     │
        │   READ MESSAGE      │      │     │
        └─────────────────────┘      │     │
                  │                   │     │
                  ▼                   │     │
        ┌─────────────────────┐      │     │
        │   SET TIMER         │      │     │
        └─────────────────────┘      │     │
                  │                   │     │
                  ▼                   │     │
        ┌─────────────────────┐      │     │
        │  INSTRUCT OUTPUT    │      │     │
        └─────────────────────┘      │     │
                  │                   │     │
                  │◄──────────────────┘     │
                  │◄────────────────────────┘
                  ▼
             ┌─────────┐
             │   END   │
             └─────────┘
```

FIG. 7

READY
TO COPY

20

65

21

23

ROM  RAM

INPUT INTERFACE

CPU

OUTPUT INTERFACE

INPUT/OUTPUT PORT

31  55  53  58

CPU

MSG.
CONTROL
ROM

TIMER

34

C
G

EDITING
RAM

DISPLAY
RAM

MSG.
ROM

54

56  57  52

25

39  40

SHIFT
REG.

X-DRIVER

42

DECODER

Y-DRIVER

41

TIMING
COUNTER

38

EP 0 147 936 B1

20

## FIG. 8A

| | |
|---|---|
| MANAGEMENT | ～59 |
| CASE TABLE | ～60 |
| DIAGNOSTIC TABLE | ～61 |
| HELP TREE TABLE | ～62 |
| MESSAGE MEMORY | ～63 |
| CHECK ROM | ～64 |

## FIG. 8B

59

| | |
|---|---|
| TOTAL MSG.-NO. STORING AREA | ～591 |
| CASE TABLE START LOW ADRS. | ～592 |
| DIAGNOSTIC TABLE START ADRS. AREA | ～593 |
| HELP TREE TABLE START ADRS. | ～594 |
| MSG.-STORING-AREA START ADRS. | ～595 |
| 60-CHA.-MSG. SMALLEST NO. | ～596 |
| 80-CHA.-MSG. SMALLEST NO. | ～597 |
| HELP TREE LARGEST RANK NO. | ～598 |
| EMPTY | ～599 |

## FIG. 8C

60

| | | |
|---|---|---|
| INITIAL MSG. NO. | | ～601 |
| OUTPUT TYPE (602) | HELP RANK NO. | ～603 |
| ALTERNATE MSG. NO. | | ～604 |
| HELP TREE TABLE POINTER | | ～605 |

## FIG. 8D

| X | 0 | 0 | 0 |
|---|---|---|---|

| X | 0 | 0 | 1 |
|---|---|---|---|

| X | 0 | 1 | 0 |
|---|---|---|---|

## FIG. 8E

| 0 | X | X | X |
|---|---|---|---|

| 1 | X | X | X |
|---|---|---|---|

21

## FIG. 8F

| | |
|---|---|
| DIAGNOSTIC MSG. NO. | DIAG. CASE 0 |
| DIAGNOSTIC MSG. NO. | DIAG. CASE 1 |
| DIAGNOSTIC MSG. NO. | DIAG. CASE 2 |
| DIAGNOSTIC MSG. NO. | DIAG. CASE n |

61

## FIG. 8G

62

| RANK 1 | HELP MSG. NO. | 621 |
| | ALTERNATE HELP MSG. NO. | 622 |
| RANK 2 | HELP MSG. NO. | |
| | ALTERNATE HELP MSG. NO. | |
| RANK n | END CODE | |

## FIG. 8H

| REWRITING START BYTE POSITION | REWRITING BYTE NO. |
|---|---|
| REWRITING START BYTE POSITION | REWRITING BYTE NO. |
| BLOCK 0 | 40-CHA.-MSG. CHARA. AREA |
| BLOCK 1 | |

631  632
634  635
636
637

## FIG. 8I

## FIG. 8J

## FIG. 8K

## FIG. 8L

EP 0 147 936 B1

## FIG. 9

(MSG.)

```
LIFT GREEN
HANDLE ON
LEFT SIDE AND
OPEN COPIER
```

⟹

(DISPLAY)          4 SEC.

```
LIFT GREEN
HANDLE ON
LEFT SIDE
```

⇩

4 SEC.

```
AND OPEN
COPIER
```

## FIG. 10

(MSG. 1)

```
READY TO
ENLARGE ---
141 % PUSH
START
```

(MSG. 2)

```
SMALLER COPY
PAPER COULD
BE USED
```

⟹

(DISPLAY)          4 SEC.

```
READY TO
ENLARGE ---141 %
PUSH START
```

⇩

4 SEC.

```
SMALLER COPY
PAPEA COULD
BE USED
```

24

## FIG. 11A

(a) MSG. 1,2 ≤40 CHA. $\dfrac{1}{4\ SEC.}$ $\dfrac{2}{4\ SEC.}$ | $\dfrac{1}{4\ SEC.}$ $\dfrac{2}{4\ SEC.}$ | $\dfrac{1}{4\ SEC.}$ $\dfrac{2}{4\ SEC.}$ | $\dfrac{1\ or\ 2}{FIXED}$

(b) MSG. 1,2>40 CHA. $\dfrac{1}{Scroll}$ $\dfrac{2}{Scroll}$ | $\dfrac{1}{Scroll}$ $\dfrac{2}{Scroll}$ | $\dfrac{1}{Scroll}$ $\dfrac{2}{Scroll}$ | $\dfrac{1\ or\ 2}{Scroll}$

(c) MSG. 1 ≤ 40CHA. / MSG. 2 > 40CHA. $\dfrac{1}{4\ SEC.}$ $\dfrac{2}{Scroll}$ | $\dfrac{1}{4\ SEC.}$ $\dfrac{2}{Scroll}$ | $\dfrac{1}{4\ SEC.}$ $\dfrac{2}{Scroll}$ | $\dfrac{1\ or\ 2}{4\ SEC.\ or\ Scroll}$

## FIG. 11B

|←——————— 60 SEC. ———————→|

(a) MSG. 1,2≤40 CHA. $\dfrac{1}{4\ SEC.}$ $\dfrac{2}{4\ SEC.}$ | $\dfrac{1}{4\ SEC.}$ $\dfrac{2}{4\ SEC.}$ | — — — — | $\dfrac{1\ or\ 2}{FIXED}$

(b) MSG. 1,2>40 CHA. $\dfrac{1}{Scroll}$ $\dfrac{2}{Scroll}$ | $\dfrac{1}{Scroll}$ $\dfrac{2}{Scroll}$ | — — — — | $\dfrac{1\ or\ 2}{Scroll}$

(c) MSG. 1 > 40 CHA. / MSG. 2 ≤ 40 CHA. $\dfrac{1}{Scroll}$ $\dfrac{2}{4\ SEC.}$ | $\dfrac{1}{Scroll}$ $\dfrac{2}{4\ SEC.}$ | — — — — | $\dfrac{1\ or\ 2}{Scroll\ or\ FIXED}$

## FIG. 12A

```
+------------------+
| REMOVE  PAPER    |
| IN  PATH  ----   |
| IS  DISPLAYED    |
+------------------+
         |
         v
+------------------+
| LIFT  GREEN      |
| HANDLE----       |
| AND  OPEN        |
| COPIER           |
+------------------+
         |
         v
+------------------+
| REMOVE  PAPER    |
| IN  PATH  ----   |
| IS  DISPLAYED    |
+------------------+
```

## FIG. 12B

```
+------------------+
| REMOVE  PAPER    |
| IN  PATH  ----   |
| IS  DISPLAYED    |
+------------------+
         |
         v
+------------------+
| REMOVE  PAPER    |
| AT  LIT          |
| RED-LAMP         |
+------------------+
         |
         v
+------------------+
| REMOVE  PAPER    |
| IN  PATH  ----   |
| IS  DISPLAYED    |
+------------------+
```

## FIG. 12C

```
+------------------+
| REMOVE  PAPER    |
| IN  PATH  ----   |
| IS  DISPLAYED    |
+------------------+
         |
         v
+------------------+
| ROTATE  #3       |
| HANDLE  ----     |
| CAN  BE          |
| REMOVED          |
+------------------+
         |
         v
+------------------+
| REMOVE  PAPER    |
| IN  PATH  ----   |
| IS  DISPLAYED    |
+------------------+
```

## FIG. 12D

```
+------------------+
| REMOVE  PAPER    |
| IN  PATH  ----   |
| IS  DISPLAYED    |
+------------------+
         |
         v
+------------------+
| CLOSE  COPIER    |
| AND              |
| PUSH  START      |
+------------------+
```

EP 0 147 936 B1

## FIG. 13

```
        ( DATA RECEPTION )
                 │
                 ▼
          ╱ RECEPTION ╲        NG
         ╱ DATA MONITOR ╲──────────────────────────┐
         ╲    OK ?      ╱                           │
          ╲           ╱                             │
                 │ OK                               │
                 ▼                                  │
          ┌──────────────┐                          │
          │ DETERMINE    │                          │
          │ OUTPUT CASE  │                          │
          └──────────────┘                          │
                 │                                  │
                 ▼                                  │
          ╱ DIFFERENT  ╲         NO                 │
         ╱ FROM PREVIOUS╲────────────────────┐      │
         ╲    CASE      ╱                     │      │
          ╲    ?       ╱                      │      │
                 │ YES                        │      │
                 ▼                            │      │
          ┌──────────────┐                    │      │
          │ READ CASE TABLE                   │      │
          │ HELP TREE TABLE                   │      │
          │ FROM MSG. ROM │                   │      │
          └──────────────┘                    │      │
                 │                            │      │
                 ▼                            │      │
          ┌──────────────┐                    │      │
          │ COMPUTE MSG. │                    │      │
          │ STORAGE ADDRESS                   │      │
          │ FROM INITIAL MSG.                 │      │
          │ NO. OF CASE  │                    │      │
          │ TABLE        │                    │      │
          └──────────────┘                    │      │
                 │                            │      │
                 ▼                            │      │
          ┌──────────────┐                    │      │
          │ READ REWRITING                    │      │
          │ DATA MSG. FROM│           ┌────────────────────┐
          │ MSG. STORAGE ROM          │ INSTRUCT OUTPUT    │
          └──────────────┘           │ TO MSG. DISPLAY    │
                 │                    │ TUBE               │
                 ▼                    └────────────────────┘
    NO    ╱    IS     ╲                        │
   ┌──────╲ REWRITING ╱                        ▼
   │       ╲DATA PRESENT                   ( END )
   │        ╲   ?    ╱
   │            │ YES
   │            ▼
   │     ┌──────────────┐
   │     │ REWRITE MSG. │
   │     └──────────────┘
   │            │
   └────────────┤
                ▼
    NO    ╱    IS     ╲
   ┌──────╲ ALTERNATE ╱
   │       ╲MSG. PRESENT
   │        ╲   ?    ╱
   │            │ YES
   │            ▼
   │     ┌──────────────┐
   │     │ SET TIMER COUNTER │
   │     └──────────────┘
   │            │
   └────────────┘
```

27

FIG. 14A

*FIG. 14B*

```
                    ( START )
                        │
                        ▼
              ╱ALTERNATE ≠ 0╲────NO────┐
              ╲  COUNT      ╱           │
                    │                   ▼
         YES│   NO           ╱ ALTERNATE ╲
            │  ◄─────────────╲  TYP=0    ╱
            ▼                 ╲    ?    ╱
    ┌──────────────┐              │YES
    │ SET 4 SEC. IN│              │
    │ MSG. OUTPUT  │              │
    │ TIMER        │              │
    └──────────────┘              │
            │◄────────────────────┘
            ▼
    ┌──────────────┐
    │ CLEAR DISPLAY│
    │ INHIBITION   │
    │ INSTRUCTION  │
    └──────────────┘
            │
            ▼
       ( RETURN )
```

*FIG. 14C*

```
                    ( START )
                        │
                        ▼
              ╱  CHA.        ╲
              ╱ PROCESSING ≠ 0╲────NO────┐
              ╲ COMMAND      ╱           │
                    │YES                 ▼
                    ▼              ┌──────────────┐
        ┌──────────────────┐      │ ALTERNATE    │
        │ PLUS 40 TO MSG.  │      │ PROCESSING   │
        │ ADDRESS          │      │ ROUTINE      │
        └──────────────────┘      └──────────────┘
                    │                     │
                    ▼                     │
        ┌──────────────────┐              │
        │ CLEAR CHA.       │              │
        │ PROCESSING       │              │
        │ COMMAND          │              │
        └──────────────────┘              │
                    │◄────────────────────┘
                    ▼
        ┌──────────────────┐
        │ DISPLAY OUTPUT   │
        │ ROUTINE          │
        └──────────────────┘
                    │
                    ▼
              ( RETURN )
```